# FASCICULE DE BREVET EUROPEEN

(11) **EP 1 504 706 B1**
(45) Date de publication et mention de la délivrance du brevet: **17.01.2007**
(21) Numéro de dépôt: 04356135.6
(22) Date de dépôt: 22.07.2004
(51) Int. Cl.: A47J 37/12, A47J 27/21

(54) **Appareil électrique de cuisson comportant un socle d'alimentation électrique**
Elektrisches Kochgerät mit einem Stromversorgungssockel
Electrical cooking appliance with an electrical power supply base

(30) Priorité: 05.08.2003 FR 0309653; 01.09.2003 FR 0310342; 19.03.2004 FR 0402873
(43) Date de publication de la demande: 09.02.2005
(73) Titulaire: SEB S.A., 69130 Ecully (FR)
(72) Inventeur: Payen, Jean-Marc, 21800 Quetigny (FR); Pretre, Nicolas, 21000 Dijon (FR)
(74) Mandataire: Kiehl, Hubert

(56) Documents cités:
- EP-A- 0 705 554
- EP-A- 1 195 122
- FR-A- 2 655 531
- FR-A- 2 720 254
- GB-A- 2 369 037

## Description

La présente invention concerne le domaine technique des appareils électriques de cuisson comprenant une cuve prévue pour contenir les aliments à cuire, si désiré dans un bain de cuisson. La présente invention concerne notamment, mais non exclusivement, les friteuses, ou encore les cuiseurs tels que par exemple les cuiseurs à riz, les cuiseurs à pâtes, les cuiseurs vapeur, les cuiseurs lents ou mijoteurs.

La présente invention concerne également les robots culinaires chauffants. Un sous ensemble de cuisson pour robot culinaire chauffant est connu du document FR 2 655 531.

Il est connu du document GB 2 255 002 une friteuse électrique comportant une cuve montée amovible dans un boîtier, un élément chauffant étant monté sous le fond de la cuve. L'élément chauffant est scellé dans une enveloppe étanche. La friteuse comporte un connecteur d'alimentation électrique amovible par rapport au boîtier et à la cuve. La friteuse peut être démontée pour pouvoir laver la cuve et le boîtier. Toutefois, les manipulations correspondantes s'avèrent assez fastidieuses.

Il est connu du document GB 2 365 757 une friteuse électrique comportant une cuve agencée dans un boîtier monté amovible sur un socle d'alimentation électrique. Cette disposition permet de faciliter le nettoyage du boîtier, et notamment le nettoyage de la cuve. Toutefois le boîtier présente une construction complexe à double paroi, avec plusieurs connexions électriques, faisant qu'il est difficile d'envisager de nettoyer un tel boîtier dans un lave-vaisselle.

L'objet de la présente invention est de proposer un appareil électrique de cuisson comprenant un socle d'alimentation électrique, un boîtier monté amovible sur ledit socle, et une cuve agencée dans ledit boîtier, dans lequel le boîtier et la cuve peuvent être lavés par aspersion et/ou par immersion.

Un autre objet de la présente invention est de proposer un appareil électrique de cuisson du type précité, dont la construction soit plus économique.

Un autre objet de la présente invention est de proposer un appareil électrique de cuisson du type précité, présentant un boîtier dans lequel la température des parois latérales est limitée.

Un autre objet de la présente invention est de proposer un appareil électrique de cuisson du type précité, dont le boîtier puisse être posé sur un support tel qu'une table.

Ces objets sont atteints avec un appareil électrique de cuisson selon la revendication 19. Le boîtier et la cuve forment un sous-ensemble de cuisson amovible par rapport au socle d'alimentation électrique. L'espace annulaire entre la paroi latérale de la cuve et la paroi latérale extérieure du boîtier communique avec l'extérieur par la ou les ouvertures inférieures. La construction proposée permet de faciliter le nettoyage de ce sous ensemble de cuisson. Le sous ensemble de cuisson peut être lavé par immersion ou par aspersion. Notamment, le sous ensemble de cuisson peut être placé en position retournée dans un lave-vaisselle. La présence de la ou des ouvertures inférieures facilite le séchage du sous ensemble de cuisson et contribue à réduire le coût de la construction, car il n'est pas nécessaire de prévoir une étanchéité entre le boîtier et la cuve. Cette construction permet de plus d'obtenir une paroi latérale extérieure présentant une température modérée lors du fonctionnement de l'appareil.

Avantageusement, la paroi latérale extérieure ménage la ou les ouvertures inférieures, cette disposition permettant de simplifier la construction.

Selon une forme de réalisation avantageuse, la ou les ouvertures inférieures s'étendent au moins partiellement sous la cuve. En alternative la ou au moins l'une des ouvertures inférieures peut être placée latéralement par rapport à la cuve.

Avantageusement, la ou les ouvertures inférieures s'étendent sous les moyens de chauffe. Cette disposition permet d'utiliser des matières plastiques économiques pour la paroi latérale extérieure, du fait des niveaux de température peu élevés. Cette disposition favorise également le séchage du sous ensemble de cuisson.

Selon un mode de réalisation avantageux, la paroi latérale de la cuve comporte un bord supérieur fixé à la partie supérieure annulaire du boîtier. Le bord supérieur peut notamment être fixé sur ou sous la partie supérieure annulaire du boîtier. Le bord supérieur peut entourer un rebord annulaire. En alternative le boîtier pourrait être fixé à la paroi latérale de la cuve.

Avantageusement au moins une ouie est agencée entre la paroi latérale de la cuve et la ou les ouvertures inférieures. Cette disposition permet, lorsque le boîtier est retourné, d'évacuer au moins une partie de l'eau entrée par la ou les ouvertures inférieures. Cette disposition permet aussi de réaliser une circulation d'air entre la paroi latérale de la cuve et la paroi latérale extérieure du boîtier.

De préférence, pour faciliter l'écoulement de l'eau lorsque le boîtier occupe une position retournée, la ou les ouies sont agencées dans la partie supérieure du boîtier.

Selon une forme de réalisation avantageuse, la ou les ouies sont ménagées dans la partie supérieure annulaire. Cette disposition permet que la ou les ouies restent à l'intérieur de l'enceinte de cuisson lorsque la partie supérieure du boîtier est fermé par un couvercle. En alternative, la ou les ouies pourraient notamment être ménagées sur la paroi latérale extérieure du boîtier, entre la partie supérieure annulaire et la paroi latérale extérieure du boîtier, voire entre la cuve et le boîtier ou dans un rebord extérieur de la cuve.

Avantageusement la ou les ouies débouchent latéralement vers la périphérie du boîtier. Cette disposition permet d'éviter que le contenu de la cuve ne pénètre par la ou les ouies en cas de débordement.

Avantageusement, pour permettre une meilleure isolation thermique, la paroi latérale extérieure enveloppe latéralement la cuve.

Avantageusement encore, la paroi latérale extérieure enveloppe latéralement la cuve et les moyens de chauffe.

Avantageusement encore, pour faciliter l'utilisation de l'appareil, le boîtier comporte une poignée.

Avantageusement encore, pour faciliter le versement du bain de cuisson contenu dans la cuve, le boîtier comporte un bec verseur. En alternative, le bec verseur pourrait être issu de la cuve.

Selon une disposition avantageuse, le boîtier comporte des moyens d'appui susceptibles de reposer sur le socle d'alimentation électrique. En alternative, les moyens d'appui pourraient être issus de la cuve.

Avantageusement alors, les moyens d'appui sont issus de la paroi latérale extérieure du boîtier. Cette disposition permet de simplifier la construction de l'appareil.

Avantageusement encore, les moyens d'appui sont susceptibles de reposer sur un support plan, par exemple une table.

Avantageusement encore les moyens de chauffe sont agencés en position supérieure par rapport aux moyens d'appui. Cette disposition permet de poser le sous ensemble de cuisson sur un support plan, sans que les moyens de chauffe ne touchent ledit support.

Avantageusement encore, un couvercle est monté amovible sur le boîtier. Le couvercle peut ainsi être retiré pour le nettoyage du boîtier et de la cuve.

Avantageusement encore le socle d'alimentation électrique comporte au moins un passage débouchant en regard de l'ouverture Inférieure. Cette disposition permet une admission d'air dans le boîtier par l'ouverture inférieure. L'air circulant par convection entre la cuve et la paroi latérale extérieure ressort par la ou les ouies et contribue à diminuer la température de la paroi latérale extérieure.

Avantageusement, la cuve est assemblée avec le boîtier. En alternative, la cuve peut être démontable par rapport au boîtier.

La présente invention concerne également un sous ensemble de cuisson pour appareil électrique de cuisson, notamment friteuse, cuiseur électrique, ou robot culinaire chauffant, comprenant un boîtier, une cuve étant agencée dans le boîtier, la cuve présentant une paroi latérale s'étendant à distance d'une paroi latérale extérieure du boîtier, une partie supérieure annulaire du boîtier reliant la cuve à la paroi latérale extérieure, des moyens de chauffe solidaires de la cuve prévus pour être reliés électriquement à un socle d'alimentation électrique lorsque le boîtier est en place sur ledit socle d'alimentation électrique, le boîtier présentant au moins une ouverture inférieure mettant en communication la cuve avec l'extérieur du boîtier, du fait que les moyens de chauffe sont formés par au moins un élément chauffant étanche susceptible d'être aspergé et/ou immergé dans l'eau, que l'ouverture inférieure ménage un espace mettant en communication les moyens de chauffe avec l'extérieur du boîtier, et que l'ouverture inférieure est prévue pour recevoir une partie du socle d'alimentation électrique.

Ce sous ensemble de cuisson peut également présenter les caractéristiques additionnelles précitées.

L'invention sera mieux comprise à l'étude d'un exemple de réalisation et de quatre variantes, pris à titre nullement limitatif, illustrés dans les figures 1 à 12 annexées, dans lesquelles :
- la figure 1 est une vue en perspective et en éclaté d'un appareil électrique de cuisson selon l'invention,
- la figure 2 est une vue en coupe transversale de l'appareil électrique de cuisson montré à la figure 1,
- la figure 3 est une vue en perspective d'une pièce de la partie supérieure du boîtier de l'appareil illustré aux figures 1 et 2,
- la figure 4 est une vue partielle en coupe radiale et en position retournée de la partie supérieure du boîtier de l'appareil illustré aux figures 1 et 2,
- la figure 5 est une vue partielle en coupe radiale et en position retournée d'une première variante de l'appareil illustré aux figures 1 à 4,
- la figure 6 est une vue partielle en coupe radiale et en position retournée d'une deuxième variante de l'appareil illustré aux figures 1 à 4,
- la figure 7 est une vue partielle en coupe radiale d'une troisième variante, au niveau de la fixation de la cuve sur le boîtier,
- la figure 8 est une vue partielle en coupe radiale de la troisième variante illustrée à la figure 7, au niveau d'une ouie,
- la figure 9 est une vue partielle de dessus de la troisième variante illustrée aux figures 7 et 8,
- la figure 10 est une vue partielle en coupe radiale d'une quatrième variante, au niveau de la fixation de la cuve sur le boîtier,
- la figure 11 est une vue partielle en coupe radiale de la quatrième variante illustrée à la figure 10, au niveau d'une ouie,
- la figure 12 est une vue partielle de dessus de la quatrième variante illustrée aux figures 10 et 11.

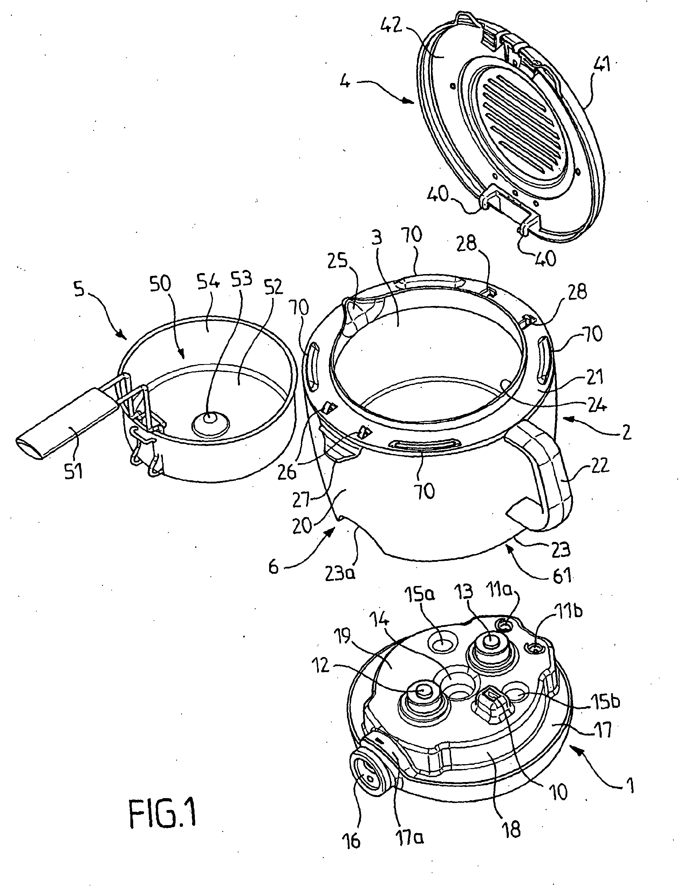

La figure 1 montre un appareil électrique de cuisson selon l'invention, tel qu'une friteuse électrique, comprenant un socle d'alimentation électrique 1, un boîtier 2 monté amovible sur le socle d'alimentation électrique 1, une cuve 3 agencée dans le boîtier 2, un couvercle 4 prévu pour fermer la cuve 3, et un panier de cuisson 5 prévu pour être disposé dans la cuve 3. Le boîtier 2 et la cuve 3 forment un sous-ensemble de cuisson 6 susceptible d'être mis en place sur le socle d'alimentation électrique 1.

Le socle d'alimentation électrique 1 comporte une face supérieure présentant un connecteur de terre 10 prévu pour être relié à la cuve 3, deux connecteurs électriques 11a, 11b prévus pour alimenter des moyens de chauffe associés à la cuve 3, un premier palpeur 12 associé à un fusible thermique, un deuxième palpeur 13 associé à une sonde de température, une dépression 14 agencée de manière centrale, et deux passages 15a, 15b permettant notamment une circulation d'air entre la face inférieure et la face supérieure du socle d'alimentation électrique 1.

Un bouton de commande 16 permet de régler la température de consigne de la régulation associée à la sonde de température. Le bouton de commande 16 est agencé sur une face latérale du socle d'alimentation électrique 1. La face supérieure du socle d'alimentation électrique 1 présente une zone d'appui 17 prévue pour recevoir le boîtier 2. La zone d'appui 17 est annulaire. La zone d'appui 17 présente un bossage 17a au niveau du bouton de commande 16. La zone d'appui 17 entoure une paroi latérale intérieure 18.

Le connecteur de terre 10, les connecteurs électriques 11a, 11b, le premier palpeur 12, le deuxième palpeur 13, la dépression 14, et les deux passages 15a, 15b sont ainsi agencés dans une partie centrale surélevée 19 du socle d'alimentation électrique 1. La paroi latérale intérieure 18 forme un moyen de centrage du boîtier 2 sur le socle d'alimentation électrique 1.

Le boîtier 2 comporte une paroi latérale extérieure 20 prolongée par une partie supérieure annulaire 21. La partie supérieure annulaire 21 s'étend vers l'intérieur du boîtier 2. Le boîtier 2 comporte une poignée 22. La poignée 22 est issue de la paroi latérale extérieure 20.

Le boîtier 2 est susceptible d'être mis en place sur le socle d'alimentation électrique 1 pour réaliser une opération de cuisson. Le boîtier 2 comporte des moyens d'appui 61 susceptibles de reposer sur le socle d'alimentation électrique 1, ou sur un autre support, notamment sur un support plan. Les moyens d'appui 61 sont formés par un bord inférieur 23 de la paroi latérale extérieure 20. Le bord inférieur 23 est prévu pour reposer sur la zone d'appui 17. Le bord inférieur 23 présente une découpe 23a prévue pour être disposée sur le bossage 17a. La découpe 23a et le bossage 17a permettent d'indiquer le positionnement du boîtier 2 sur le socle d'alimentation électrique 1.

La partie supérieure annulaire 21 du boîtier 2 entoure une paroi annulaire intérieure 24. Le boîtier 2 comporte un bec verseur 25. Le bec verseur 25 est ménagé dans la paroi annulaire intérieure 24.

Des moyens d'accrochage 26 sont prévus pour coopérer avec le couvercle 4. Les moyens d'accrochage 26 sont agencés à l'extérieur de la paroi annulaire intérieure 24. Les moyens d'accrochage 26 sont associés à des moyens de commande 27.

Des ouies 70 sont ménagées sur la partie annulaire supérieure 21. Les ouies 70 présentent chacune une ouverture latérale orientée vers la périphérie du boîtier 2. Les ouies 70 sont prévues pour mettre en communication avec l'extérieur l'espace annulaire situé entre la cuve 3 et la paroi latérale extérieure 20 du boîtier 2. Les ouies 70 permettent l'évacuation de l'eau lorsque le boîtier 2 et la cuve 3 sont disposés retournés dans un lave-vaisselle. Les ouies 70 sont disposées au dessus des moyens d'appui 61 mais sont décalées par rapport à la découpe 23a. Le bec verseur 25 est agencé entre deux ouies 70.

Le couvercle 4 est monté amovible sur le boîtier 2. Le couvercle 4 comporte deux éléments de charnière 40 prévus pour coopérer avec des conformations 28 du boîtier 2. Les conformations 28 sont ménagées dans la partie supérieure annulaire 21. Les conformations 28 sont agencées à l'extérieur de la paroi annulaire intérieure 24. Le couvercle 4 comporte une paroi extérieure 41 et une paroi intérieure 42 formant un pare-vapeur.

Le panier de cuisson 5 comporte un tamis 50 réalisé par exemple en grille métallique, et une poignée 51. Le tamis 50 présente un fond 52 ayant une protubérance 53, et des parois latérales 54.

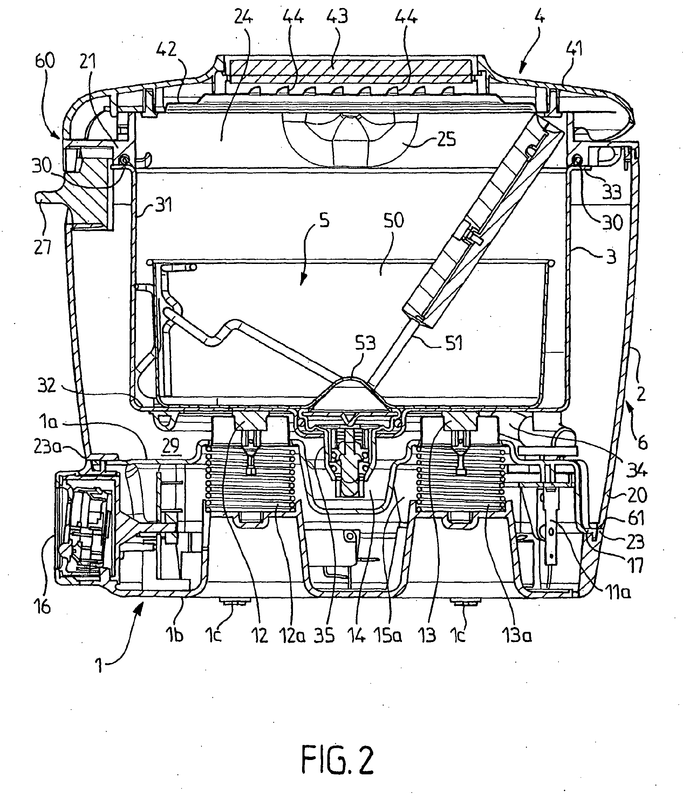

Tel que montré à la figure 2, le socle d'alimentation électrique 1 comporte un capot 1a monté sur une base 1b. La base 1b présente des pieds 1c. Le premier palpeur 12 et le deuxième palpeur 13 sont montés chacun contre un moyen de rappel élastique 12a, 13a. Les passages 15b (non visible à la figure 2) et 15a traversent le capot 1a et la base 1b en formant des cheminées.

La cuve 3 est avantageusement prévue pour recevoir un bain de cuisson. La cuve 3 présente une paroi latérale 31 et un fond 32. La paroi latérale 31 est prolongée par la paroi annulaire intérieure 24. La paroi latérale 31 comporte un bord supérieur 33. Le bord supérieur 33 est formé par une collerette périphérique s'étendant vers l'extérieur. La cuve 3 est assemblée avec la partie supérieure annulaire 21 du boîtier 2, par exemple par vissage. Un joint 30 est intercalé entre la partie supérieure annulaire 21 et le bord supérieur 33. Le bord supérieur 33 est fixé à la partie supérieure annulaire 21. La paroi latérale 31 de la cuve 3 s'étend à distance de la paroi latérale extérieure 20 du boîtier 2.

Des moyens de chauffe 34 sont solidaires de la cuve 3, pour obtenir un bon échange thermique. Les moyens de chauffe 34 sont par exemple soudés ou brasés sous le fond 32 de la cuve 3. Les moyens de chauffe 34 sont reliés électriquement au socle d'alimentation électrique 1 lorsque le boîtier 2 repose sur le socle d'alimentation électrique 1. Les bornes des moyens de chauffe 34 coopèrent alors avec les connecteurs électriques 11b (non visible à la figure 2) et 11a.

Tel que bien visible sur la figure 2, les moyens de chauffe 34 sont agencés en position supérieure par rapport aux moyens d'appui 61.

Les moyens de chauffe 34 sont formés par au moins un élément chauffant étanche susceptible d'être aspergé et/ou immergé dans l'eau. Tel qu'illustré aux figures, les moyens de chauffe 34 sont formés par un élément chauffant blindé. A titre de variante, d'autres types de moyens de chauffe peuvent être envisagés, tels que notamment des éléments chauffants sérigraphiés.

La cuve 3 comporte une protubérance inférieure prévue pour s'engager dans le connecteur de terre 10 lorsque le sous ensemble de cuisson 6 est en place sur le socle de connexion électrique 1.

La cuve 3 est munie d'un dispositif de vidange 35, non décrit en détail car indépendant de la présente invention. Le dispositif de vidange 35 est agencé sous le fond 32 de la cuve 3. Le bord inférieur 23 du boîtier 2 s'étend plus bas que le dispositif de vidange 35. De ce fait le dispositif de vidange 35 s'étend au dessus du plan d'appui du boîtier 2 défini par les moyens d'appui 61. Le dispositif de vidange 35 est logé dans la dépression 14 lorsque le boîtier 2 est en place sur le socle d'alimentation électrique 1. La protubérance 53 vient sur le dispositif de vidange 35 lorsque le panier 5 est en place dans la cuve 3.

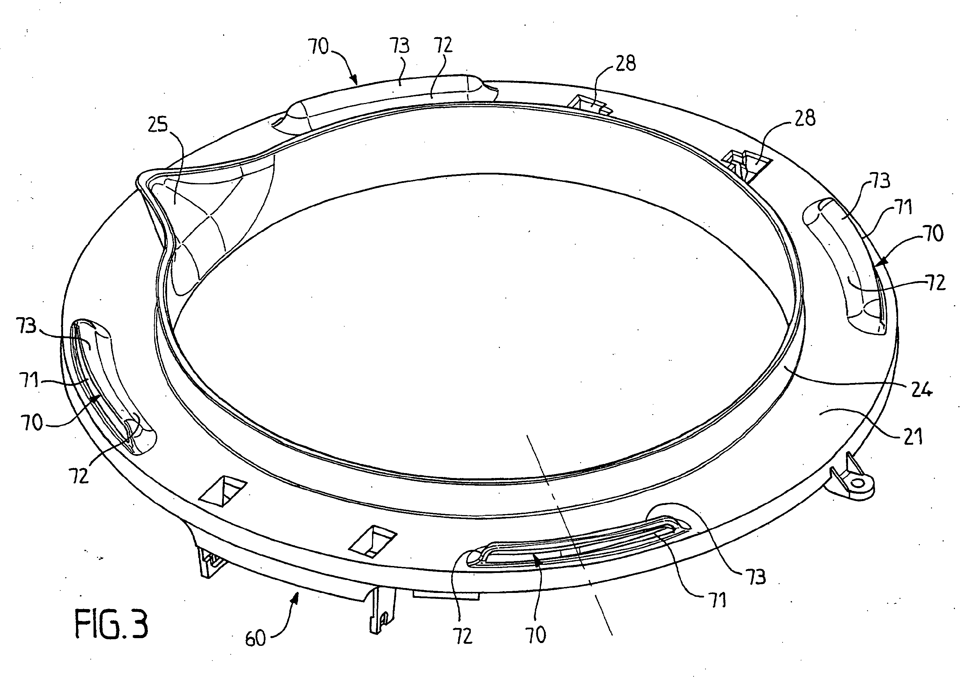

La partie supérieure annulaire 21 du boîtier 2 relie la cuve 3 à la paroi latérale extérieure 20. La partie supérieure annulaire 21 et la paroi annulaire intérieure 24 appartiennent à une bague 60, mieux visible à la figure 3. La bague 60 est par exemple réalisée en matière plastique résistant aux températures élevées du bord supérieur 33 de la cuve 3, ces températures pouvant atteindre 150°C lorsque la cuve 3 est réalisée en aluminium. La bague 60 peut notamment être réalisée en PBT. La bague 60 est assemblée avec la paroi latérale extérieure 20, par exemple par vissage.

La paroi latérale extérieure 20 du boîtier 2 ménage une ouverture inférieure 29. L'espace annulaire entre la paroi latérale 31 de la cuve 3 et la paroi latérale 20 extérieure du boîtier 2 communique avec l'extérieur par l'ouverture inférieure 29. Tel que visible sur la figure 2, l'ouverture inférieure 29 s'étend sous la cuve 3. Le fond 32 de la cuve 3 est ainsi accessible lorsque le boîtier 2 est retiré du socle d'alimentation électrique 1. Plus particulièrement, l'ouverture inférieure 29 s'étend sous les moyens de chauffe 34. Dans la construction préférée illustrée à la figure 2, le diamètre de l'ouverture inférieure 29 est supérieur au diamètre du fond 32 de la cuve 3.

La paroi latérale extérieure 20 peut être réalisée en matière plastique, notamment en polypropylène. La paroi latérale extérieure 20 enveloppe latéralement la cuve 3 et les moyens de chauffe 34.

La poignée 51 du panier de cuisson peut être repliée pour occuper une position de rangement dans la cuve 3 lorsque le couvercle 4 est fermé, tel que représenté à la figure 2. Le couvercle 4 présente un filtre 43 agencé au dessus de passages 44 ménagés dans la paroi intérieure 42.

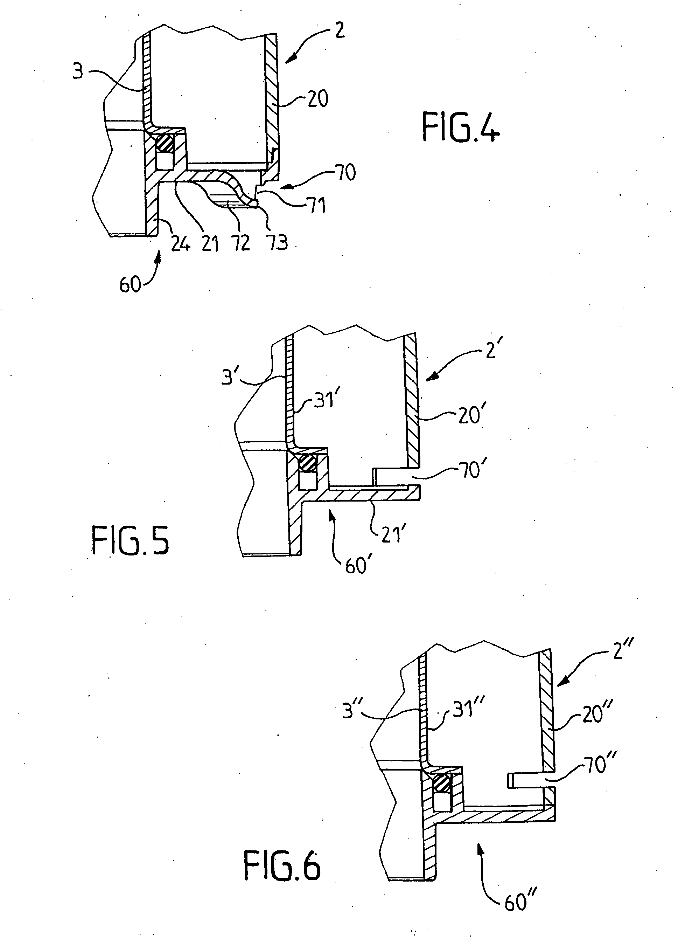

Tel que mieux visible aux figures 3 et 4, chacune des ouies 70 comporte une ouverture 71, une paroi latérale 72 et une paroi supérieure 73. Les ouvertures 71 débouchent latéralement vers la périphérie du boîtier 2.

Les ouies 70 sont prévues pour mettre en communication avec l'extérieur l'espace annulaire situé entre la paroi latérale 31 de la cuve 3 et le boîtier 2.

Le couvercle 4 rabattu sur le boîtier 2 ferme les ouies 70. La circulation d'air entre l'espace annulaire et l'enceinte de cuisson définie par la cuve 3 et le couvercle 4 est ainsi limitée.

L'appareil selon l'invention fonctionne et s'utilise de la manière suivante.

La mise en place du sous ensemble de cuisson 6 sur le socle d'alimentation électrique 1 permet un contact du premier palpeur 12 et du deuxième palpeur 13 avec la cuve 3, la connexion électrique des moyens de chauffe 34 avec les deux connecteurs électriques 11a, 11b, et une connexion à la terre de la cuve 3. Le bouton de commande 16 permet de choisir la température du bain de cuisson disposé dans la cuve 3.

L'ouverture inférieure 29 permet le passage de la partie centrale surélevée 19 du socle d'alimentation électrique 1, dans laquelle sont logés les connecteurs électriques 11a, 11b, et le connecteur de terre 10. Ainsi l'ouverture inférieure 29 met en communication les moyens de chauffe 34 avec l'extérieur du boîtier 2.

Là poignée 22 permet de manipuler aisément le sous ensemble de cuisson 6. L'absence d'élément de régulation dans le boîtier 2 permet un allégement du sous ensemble de cuisson 6. Le couvercle 4 et le panier 5 peuvent être retirés du sous ensemble de cuisson 6. La déconnexion électrique s'effectue simplement en soulevant le sous ensemble de cuisson 6 du socle d'alimentation électrique 1. Le bain de cuisson contenu dans la cuve 3 peut être vidé par le bec verseur 25 ou par le dispositif de vidange 35.

Le panier 5, le couvercle 4 et le sous ensemble de cuisson 6 peuvent être lavés par immersion et/ou par aspersion. Notamment, le sous ensemble de cuisson 6 peut être placé en position retournée dans un lave-vaisselle, afin que les jets de lavage puissent atteindre la face intérieure de la cuve 3. Les ouies 70 permettent à l'eau qui rentre par l'ouverture inférieure 29 d'être évacuée. La rétention d'eau dans le sous ensemble de cuisson 6 est ainsi évitée.

Lors d'un fonctionnement anormal en cuisson, par exemple si la cuve 3 a été trop remplie, le bain de cuisson contenu dans la cuve 3 peut déborder et passer par dessus la paroi annulaire intérieure 24. Dans ces conditions, les parois latérales 72, les parois supérieures 73 et les ouvertures 71 débouchant latéralement vers la périphérie du boîtier 2 limitent au maximum les retombées du bain de cuisson sur la partie centrale surélevée 19 du socle d'alimentation électrique 1. En présence du couvercle 4, les ouies 70 sont obturées.

Le sous-ensemble de cuisson 6 peut reposer sur un support plan, du fait que les moyens de chauffe 34 sont agencés en position supérieure par rapport aux moyens d'appui 61.

En variante la régulation agencée dans le socle d'alimentation électrique 1 peut être adaptée pour d'autres types de cuisson, notamment pour la cuisson du riz, ou encore pour la réalisation de préparations mijotées ou rissolées. L'appareil électrique de cuisson selon l'invention n'est pas nécessairement limité à une friteuse électrique ou à un cuiseur à riz électrique.

La figure 5 illustre un boîtier 2' d'une première variante de réalisation différant de l'exemple de réalisation illustré aux figures 1 à 4 en ce que les ouies 70' (dont une seule est visible à la figure 5) sont ménagées entre la paroi supérieure annulaire 21' et la paroi latérale extérieure 20'. Les ouies 70' débouchent latéralement vers la périphérie du boîtier 2'. Les ouies 70' sont de préférence agencées en regard de la bague 60', et non en regard de la paroi latérale 31' de la cuve 3'.

La figure 6 illustre un boîtier 2" d'une deuxième variante de réalisation différant de l'exemple de réalisation illustré aux figures 1 à 4 en ce que les ouies 70" (dont une seule est visible à la figure 6) sont ménagées dans la paroi latérale extérieure 20". Les ouies 70" débouchent latéralement vers la périphérie du boîtier 2". Les ouies 70" sont de préférence agencées en regard de la bague 60", et non en regard de la paroi latérale 31" de la cuve 3".

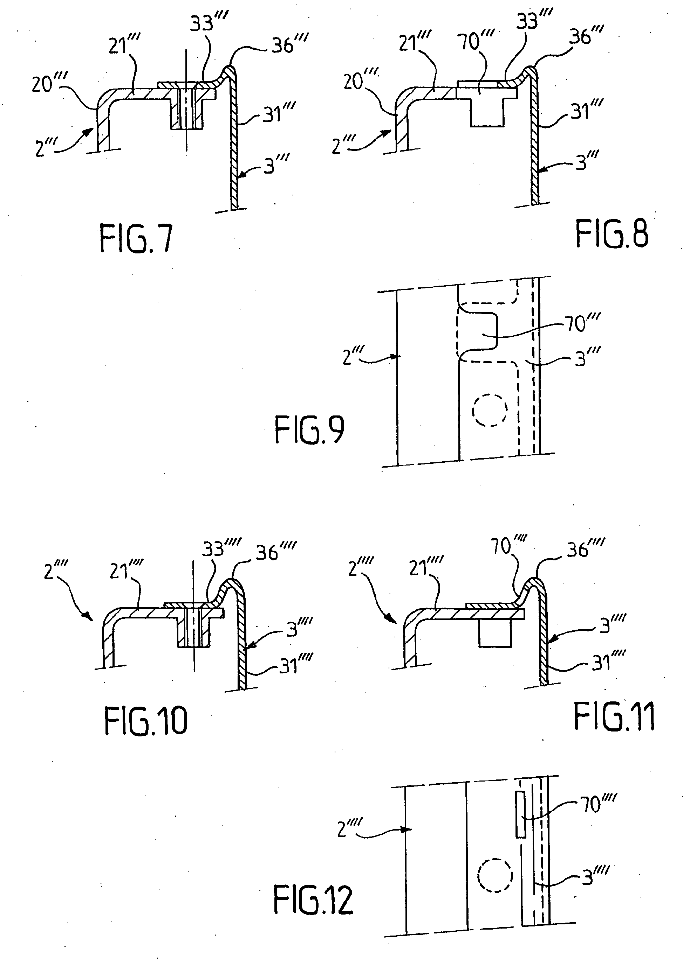

Les figures 7 à 9 illustrent une autre variante de réalisation, dans laquelle le bord supérieur 33"' de la cuve 3"' est assemblé avec la partie supérieure annulaire 21 "' du boîtier 2"'. La partie supérieure annulaire 21 "' est issue de la paroi latérale extérieure 20"'. La paroi latérale extérieure 20"' est alors de préférence réalisée en matière plastique supportant les températures atteintes par le bord supérieur de la cuve 3"'. Cette variante de réalisation diffère de l'exemple de réalisation et des variantes précédents en ce que les ouies 70"' n'appartiennent pas uniquement au boîtier 2'''. Les ouies 70"', dont une seule est visible aux figures 8 et 9, sont formées entre le bord supérieur 33"' de la cuve 3"' et la partie supérieure annulaire 21 "' du boîtier 2"'. De préférence, la cuve 3"' présente un rebord annulaire 36"' s'élevant au dessus des ouies 70"'.

Les figures 10 à 12 illustrent une autre variante de réalisation différant de la variante de réalisation précédente en ce que les ouies 70"", dont une seule est visible aux figures 11 et 12, sont formées dans la paroi de la cuve 3"" entre le rebord annulaire 36"" et le bord supérieur 33"" assemblé avec la partie supérieure annulaire 21 "" du boîtier 2"". Les ouies 70"" sont ainsi disposées à l'extérieur de la paroi latérale 31 "" de la cuve 3"".

Dans les variantes de réalisation, les ouies ne sont pas obturées par le couvercle fermant la cuve. Cette disposition permet de réduire la température de la partie supérieure du boîtier en facilitant une circulation d'air entre la paroi latérale extérieure du boîtier et la paroi latérale de la cuve.

A titre de variante complémentaire, la paroi latérale extérieure du boîtier n'est pas nécessairement réalisée en une seule pièce. La paroi latérale extérieure du boîtier n'est pas nécessairement réalisée en matière plastique.

A titre de variante complémentaire, l'appareil peut comporter différents types d'ouies présentant des constructions différentes.

A titre de variante complémentaire, le boîtier pourrait ne comporter qu'une seule ouie.

A titre de variante complémentaire, les parois latérales 72 et/ou les parois supérieures 73 des ouies 70 pourraient être supprimées.

A titre de variante complémentaire, l'ouverture inférieure 29 peut s'étendre au moins partiellement sous la cuve, sans nécessairement dégager tout le fond 32 de la cuve.

A titre de variante complémentaire, l'ouverture inférieure 29 pourrait être placée latéralement par rapport à la cuve.

A titre de variante complémentaire, le boîtier peut présenter une pièce rapportée sous la paroi latérale extérieure. La paroi latérale extérieure comporte l'ouverture inférieure 29. Le boîtier présente alors une autre ouverture inférieure.

A titre de variante complémentaire, le boîtier peut comporter plusieurs ouvertures inférieures. Par exemple, une première ouverture inférieure peut être agencée sous les bornes des moyens de chauffe 34 et une deuxième ouverture inférieure peut être agencée sous la protubérance inférieure de la cuve 3.

A titre de variante complémentaire les moyens d'appui peuvent être disposés plus bas que la ou les ouvertures inférieures.

A titre de variante complémentaire, les moyens d'appui ne sont pas nécessairement issus de la paroi latérale extérieure. Les moyens d'appui peuvent notamment appartenir à une ou plusieurs pièces du boîtier rapportées sous la paroi latérale extérieure. Les moyens d'appui n'appartiennent pas nécessairement au boîtier, mais peuvent être issus de la cuve ou appartenir à une ou plusieurs pièces rapportées sous la cuve.

A titre de variante complémentaire, au moins l'une des bornes des moyens de chauffe 34 et/ou la protubérance inférieure de la cuve 3 peuvent sortir par la ou les ouvertures inférieures.

A titre de variante complémentaire, le socle d'alimentation électrique 1 peut comporter un interrupteur actionné par le boîtier lorsque ledit boîtier est mis en place sur le socle d'alimentation électrique. Cette disposition permet de limiter les risques d'arc électrique entre les moyens de chauffe 34 et les connecteurs électriques 11a, 11b.

A titre de variante complémentaire, le boîtier peut comporter une ou plusieurs poignées. Le boîtier peut aussi comporter une anse de versement.

A titre de variante complémentaire, une ou plusieurs entretoises peuvent être prévues entre la paroi latérale extérieure du boîtier et la paroi latérale de la cuve, notamment pour les appareils prévus pour des cuissons dans l'eau ou à la vapeur, tels que par exemple les cuiseurs à riz ou les cuiseurs vapeur. Les entretoises peuvent être par exemple constituées par des nervures issues de la face interne de la paroi latérale extérieure du boîtier. Les entretoises permettent de centrer la cuve et de contribuer à limiter la déformation de la paroi latérale extérieure du boîtier.

A titre de variante complémentaire, d'autres configurations d'assemblage entre le boîtier et la cuve peuvent être envisagées. Le boîtier peut également être démontable par rapport à la cuve.

La présente invention n'est nullement limitée à l'exemple de réalisation décrit et à ses variantes, mais englobe de nombreuses modifications dans le cadre des revendications.

## Revendications

1. Sous ensemble de cuisson pour appareil électrique de cuisson, notamment friteuse, cuiseur électrique, ou robot culinaire chauffant, comprenant un boîtier (2 ; 2' ; 2" ; 2"' ; 2""), une cuve (3 ; 3' ; 3" ; 3''' ; 3"") étant agencée dans le boîtier, la cuve présentant une paroi latérale (31 ; 31' ; 31" ; 31''' ; 31 "") s'étendant à distance d'une paroi latérale extérieure (20 ; 20' ; 20" ; 20"') du boîtier, une partie supérieure annulaire (21 ; 21' ; 21" ; 21''' ; 21''') du boîtier (2 ; 2' ; 2" ; 2"' ; 2"") reliant la cuve (3 ; 3' ; 3" ; 3''' ; 3"") à la paroi latérale extérieure (20 ; 20' ; 20" ; 20"'), des moyens de chauffe (34) solidaires de la cuve (3 ; 3' ; 3" ; 3''' ; 3"") prévus pour être reliés électriquement à un socle d'alimentation électrique (1) lorsque le boîtier (2 ; 2' ; 2" ; 2"' ; 2"") est en place sur ledit socle d'alimentation électrique (1), le boîtier (2 ; 2' ; 2" ; 2"' ; 2"") présentant au moins une ouverture inférieure (29) mettant en communication la cuve (3 ; 3' ; 3" ; 3"' ; 3"") avec l'extérieur du boîtier (2 ; 2' ; 2" ; 2"' ; 2""), **caractérisé en ce que** les moyens de chauffe (34) sont formés par au moins un élément chauffant étanche susceptible d'être aspergé et/ou d'être immergé dans l'eau, **en ce que** l'ouverture inférieure (29) ménage un espace mettant en communication les moyens de chauffe (34) avec l'extérieur du boîtier (2 ; 2' ; 2" ; 2'" ; 2""), et **en ce que** l'ouverture inférieure (29) est prévue pour recevoir une partie supérieure du socle d'alimentation électrique (1).

2. Sous ensemble de cuisson selon la revendication 1, **caractérisé en ce** la paroi latérale extérieure (20 ; 20' ; 20" ; 20"') ménage la ou les ouvertures inférieures (29).

3. Sous ensemble de cuisson selon l'une des revendications 1 ou 2, **caractérisé en ce que** la ou les ouvertures inférieures (29) s'étendent au moins partiellement sous la cuve (3 ; 3' ; 3" ; 3"' ; 3"")

4. Sous ensemble de cuisson selon la revendication 3, **caractérisé en ce que** la ou les ouvertures inférieures (29) s'étendent sous les moyens de chauffe (34).

5. Sous ensemble de cuisson selon l'une des revendications 1 à 4, **caractérisé en ce que** la paroi latérale (31 ; 31' ; 31" ; 31''' ; 31"") de la cuve (3 ; 3' ; 3" ; 3"' ; 3"") comporte un bord supérieur (33 ; 33"' ; 33"") fixé à la partie supérieure annulaire (21 ; 21' ; 21" ; 21''' ; 21''') du boîtier (2 ; 2' ; 2" ; 2''' ; 2"").

6. Sous ensemble de cuisson selon l'une des revendications 1 à 5, **caractérisé en ce qu'**au moins une ouie (70 ; 70' ; 70" ; 70"' ; 70"") est agencée entre la paroi latérale (31 ; 31' ; 31" ; 31''' ; 31 "") de la cuve (3 ; 3' ; 3" ; 3"' ; 3"") et la ou les ouvertures inférieures (29).

7. Sous ensemble de cuisson selon la revendication 6, **caractérisé en ce que** la ou les ouies (70) sont ménagées dans la partie supérieure annulaire (21).

8. Sous ensemble de cuisson selon l'une des revendications 6 ou 7, **caractérisé en ce que** la ou les ouies (70 ; 70' ; 70") débouchent latéralement vers la périphérie du boîtier (2 ; 2' ; 2").

9. Sous ensemble de cuisson selon l'une des revendications 1 à 8 **caractérisé en ce que** la paroi latérale extérieure (20) enveloppe latéralement la cuve (3).

10. Sous ensemble de cuisson selon la revendication 9, **caractérisé en ce que** la paroi latérale extérieure (20) enveloppe latéralement la cuve (3) et les moyens de chauffe (34).

11. Sous ensemble de cuisson selon l'une des revendications 1 à 10 **caractérisé en ce que** le boîtier (2) comporte une poignée (22).

12. Sous ensemble de cuisson selon l'une des revendications 1 à 11 **caractérisé en ce que** le boîtier (2) comporte un bec verseur (25).

13. Sous ensemble de cuisson selon l'une des revendications 1 à 12, **caractérisé en ce que** le boîtier (2) comporte des moyens d'appui (61) susceptibles de reposer sur le socle d'alimentation électrique (1).

14. Sous ensemble de cuisson selon la revendication 13, **caractérisé en ce que** les moyens d'appui (61) sont issus de la paroi latérale extérieure (20).

15. Sous ensemble de cuisson selon l'une des revendications 13 ou 14, **caractérisé en ce que** les moyens d'appui (61) sont susceptibles de reposer sur un support plan.

16. Sous ensemble de cuisson selon l'une des revendications 13 à 15, **caractérisé en ce que** les moyens de chauffe (34) sont agencés en position supérieure par rapport aux moyens d'appui (61).

17. Sous ensemble de cuisson selon l'une des revendications 1 à 16 **caractérisé en ce qu'**un couvercle (4) est monté amovible sur le boîtier (2).

18. Sous ensemble de cuisson selon l'une des revendications 1 à 17 **caractérisé en ce que** la cuve (3 ; 3' ; 3" ; 3''' ; 3"") est assemblée avec le boîtier (2 ; 2' ; 2" ; 2''' ; 2"").

19. Appareil électrique de cuisson, notamment friteuse, cuiseur électrique, ou robot culinaire chauffant, comprenant un sous ensemble de cuisson selon l'une des revendications 1 à 18 et un socle d'alimentation électrique (1), **caractérisé en ce que** le boîtier (2 ; 2' ; 2" ; 2"' ; 2"") est monté amovible sur le socle d'alimentation électrique (1).

20. Appareil électrique de cuisson selon la revendication 19, **caractérisé en ce que** le socle d'alimentation électrique (1) comporte au moins un passage (15a, 15b) débouchant en regard de l'ouverture inférieure (29).

## Claims

1. A cooking sub-assembly for an electrical cooking appliance, in particular a deep fat fryer, electric cooker, or heated food processor, comprising a housing (2; 2'; 2"; 2"', 2""), a container (3; 3'; 3"; 3"'; 3"") being arranged in the housing, the container having a side wall (31; 31'; 31"; 31"'; 31"") extending at a distance from an outer side wall (20; 20'; 20"; 20"') of the housing, an upper annular portion (21; 21'; 21 "; 21"'; 21"") of the housing (2; 2'; 2"; 2"', 2"") linking the container (3; 3'; 3"; 3"'; 3"") to the outer side wall (20; 20'; 20"; 20"'), heater means (34) fixed to the container (3; 3'; 3"; 3"'; 3"") provided for electrical connection to a power supply base (1) when the housing (2; 2'; 2"; 2"', 2"") is positioned on said power supply base (1), the housing (2; 2'; 2"; 2"', 2"") having at least one lower opening (29) placing the container (3; 3'; 3"; 3"'; 3"") in communication with the outside of the housing (2; 2'; 2"; 2"', 2""), **characterized in that** the heater means (34) are formed by at least one sealed heater element which can be sprayed with and/or immersed in water, **in that** the lower opening (29) provides a space placing the heater means (34) in communication with the outside of the housing (2; 2'; 2"; 2"', 2""), and **in that** the lower opening (29) is provided to receive an upper portion of the power supply base (1).

2. A cooking sub-assembly according to claim 1, **characterized in that** the outer side wall (20; 20'; 20"; 20"') provides the lower opening(s) (29).

3. A cooking sub-assembly according to claim 1 or claim 2, **characterized in that** the lower opening(s) (29) extend(s) at least partially beneath the container (3; 3'; 3"; 3"'; 3"").

4. A cooking sub-assembly according to claim 3, **characterized in that** the lower opening(s) (29) extend(s) beneath the heater means (34).

5. A cooking sub-assembly according to any one of claims 1 to 4, **characterized in that** the side wall (31; 31'; 31"; 31"'; 31 "") of the container (3; 3'; 3"; 3"'; 3'''') includes an upper rim (33; 33'"; 33"") fixed to the upper annular portion (21; 21'; 21"; 21'"; 21 "") of the housing (2; 2'; 2"; 2"', 2'''').

6. A cooking sub-assembly according to any one of claims 1 to 5, **characterized in that** at least one vent (70; 70'; 70"; 70"'; 70"") is arranged between the side wall (31; 31'; 31"; 31"'; 31 "") of the container (3; 3'; 3"; 3"'; 3"") and the lower opening(s) (29).

7. A cooking sub-assembly according to claim 6, **characterized in that** the vent(s) (70) is/are arranged in the upper annular portion (21).

8. A cooking sub-assembly according to claim 6 or claim 7, **characterized in that** the vent(s) (70; 70'; 70") open(s) laterally towards the periphery of the housing (2; 2'; 2").

9. A cooking sub-assembly according to any one of claims 1 to 8, **characterized in that** the outer side wall (20) laterally envelops the container (3).

10. A cooking sub-assembly according to claim 9, **characterized in that** the outer side wall (20) laterally envelops the container (3) and the heater means (34).

11. A cooking sub-assembly according to any one of claims 1 to 10, **characterized in that** the housing (2) includes a handle (22).

12. A cooking sub-assembly according to any one of claims 1 to 11, **characterized in that** the housing (2) includes a pouring spout (25).

13. A cooking sub-assembly according to any one of claims 1 to 12, **characterized in that** the housing (2) includes bearing means (61) suitable for resting on the power supply base (1).

14. A cooking sub-assembly according to claim 13, **characterized in that** the bearing means (61) stem from the outer side wall (20).

15. A cooking sub-assembly according to claim 13 or claim 14, **characterized in that** the bearing means (61) are suitable for resting on a flat support.

16. A cooking sub-assembly according to any one of claims 13 to 15, **characterized in that** the heater means (34) are arranged in a position which is higher than that of the bearing means (61).

17. A cooking sub-assembly according to any one of claims 1 to 16, **characterized in that** a lid (4) is removably mounted on the housing (2).

18. A cooking sub-assembly according to any one of claims 1 to 17, **characterized in that** the container (3; 3'; 3"; 3"'; 3"") is assembled with the housing (2; 2'; 2"; 2"', 2"").

19. An electrical cooking appliance, in particular a deep fat fryer, an electric cooker or a heated food processor, comprising a cooking sub-assembly according to any one of claims 1 to 18 and a power supply base (1), **characterized in that** the housing (2; 2'; 2"; 2"', 2"") is removably mounted on the power supply base (1).

20. An electrical cooking appliance according to claim 19, **characterized in that** the power supply base (1) includes at least one passage (15a, 15b) opening facing the lower opening (29).

## Patentansprüche

1. Kochunterbaugruppe für ein elektrisches Kochgerät, insbesondere eine Friteuse, einen elektrischen Kochtopf oder eine heizende Küchenmaschine, mit einem Gehäuse (2; 2'; 2"; 2"'; 2""), wobei eine Wanne (3; 3'; 3"; 3"'; 3"") im Gehäuse angeordnet ist, wobei die Wanne eine Seitenwand (31; 31'; 31 "; 31 "'; 31 "") aufweist, die sich im Abstand von einer äußeren Seitenwand (20; 20'; 20"; 20"') des Gehäuses erstreckt, wobei ein ringförmiger oberer Teil (21; 21'; 21"; 21"; 21 "") des Gehäuses die Wanne (3; 3'; 3"; 3"'; 3"") mit der äußeren Seitenwand (20; 20'; 20"; 20"') verbindet, mit Heizmitteln (34), die mit der Wanne (3; 3'; 3"; 3"'; 3"") fest verbunden und dazu vorgesehen sind, mit einem Sockel (1) zur elektrischen Versorgung elektrisch verbunden zu sein, wenn das Gehäuse (2; 2'; 2"; 2"'; 2"") auf den Sockel (1) zur elektrischen Versorgung aufgesetzt ist, wobei das Gehäuse (2; 2'; 2"; 2"'; 2"") mindestens eine untere Öffnung (29) aufweist, die die Wanne (3; 3'; 3"; 3"'; 3"") mit dem Äußeren des Gehäuses (2; 2'; 2"; 2"'; 2"") verbindet, **dadurch gekennzeichnet, dass** die Heizmittel (34) durch mindestens ein dichtes Heizelement gebildet sind, das mit Wasser befeuchtet und/oder ins Wasser eingetaucht werden kann, dass die untere Öffnung (29) einen Raum bildet, der die Heizmittel (34) mit dem Äußeren des Gehäuses (2; 2'; 2"; 2"'; 2"") verbindet, und dass die untere Öffnung (29) dazu vorgesehen ist, einen oberen Teil des Sockels (1) zur elektrischen Versorgung aufzunehmen.

2. Kochunterbaugruppe nach Anspruch 1, **dadurch gekennzeichnet, dass** die äußere Seitenwand (20; 20'; 20"; 20"') die untere Öffnung bzw. unteren Öffnungen bildet.

3. Kochunterbaugruppe nach einem der Ansprüche 1 oder 2, **dadurch gekennzeichnet, dass** die untere Öffnung bzw. unteren Öffnungen (29) sich mindestens teilweise unter der Wanne (3; 3'; 3"; 3"'; 3"") erstreckt bzw. erstrecken.

4. Kochunterbaugruppe nach Anspruch 3, **dadurch gekennzeichnet, dass** die untere Öffnung bzw. unteren Öffnungen (29) sich unter den Heizmitteln (34) erstreckt bzw. erstrecken.

5. Kochunterbaugruppe nach einem der Ansprüche 1 bis 4, **dadurch gekennzeichnet, dass** die Seitenwand (31; 31'; 31 "; 31 "'; 31 "") der Wanne (3; 3'; 3"; 3"'; 3"") einen oberen Rand (33; 33"', 33"") aufweist, der am ringförmigen oberen Teil (21; 21'; 21 "; 21 "'; 21 "") des Gehäuses (2; 2'; 2"; 2"'; 2"") befestigt ist.

6. Kochunterbaugruppe nach einem der Ansprüche 1 bis 5, **dadurch gekennzeichnet, dass** mindestens ein Schlitz (70; 70'; 70"; 70"'; 70"") zwischen der Seitenwand (31; 31'; 31 "; 31"'; 31 "") der Wanne (3; 3'; 3"; 3"'; 3"") und der unteren Öffnung bzw. den unteren Öffnungen (29) angeordnet ist.

7. Kochunterbaugruppe nach Anspruch 6, **dadurch gekennzeichnet, dass** der Schlitz bzw. die Schlitze (70) im ringförmigen oberen Teil (21) eingebracht ist bzw. sind.

8. Kochunterbaugruppe nach einem der Ansprüche 6 oder 7, **dadurch gekennzeichnet, dass** der Schlitz bzw. die Schlitze (70; 70'; 70") seitlich zum Umfang des Gehäuses (2; 2'; 2") mündet bzw. münden.

9. Kochunterbaugruppe nach einem der Ansprüche 1 bis 8, **dadurch gekennzeichnet, dass** die äußere Seitenwand (20) die Wanne (3) seitlich umgibt.

10. Kochunterbaugruppe nach Anspruch 9, **dadurch gekennzeichnet, dass** die äußere Seitenwand (20) die Wanne (3) und die Heizmittel (34) seitlich umgibt.

11. Kochunterbaugruppe nach einem der Ansprüche 1 bis 10, **dadurch gekennzeichnet, dass** das Gehäuse (2) einen Griff (22) aufweist.

12. Kochunterbaugruppe nach einem der Ansprüche 1 bis 11, **dadurch gekennzeichnet, dass** das Gehäuse (2) eine Ausgießtülle (25) aufweist.

13. Kochunterbaugruppe nach einem der Ansprüche 1 bis 12, **dadurch gekennzeichnet, dass** das Gehäuse (2) Anlagemittel (61) aufweist, die am Sockel (1) zur elektrischen Versorgung anliegen können.

14. Kochunterbaugruppe nach Anspruch 13, **dadurch gekennzeichnet, dass** die Anlagemittel (61) aus der äußeren Seitenwand (20) hervorgehen.

15. Kochunterbaugruppe nach einem der Ansprüche 13 oder 14, **dadurch gekennzeichnet, dass** die Anlagemittel (61) auf einem ebenen Träger anliegen können.

16. Kochunterbaugruppe nach einem der Ansprüche 13 bis 15, **dadurch gekennzeichnet, dass** die Heizmittel (34) in Bezug auf die Anlagemittel (61) in oberer Position angeordnet sind.

17. Kochunterbaugruppe nach einem der Ansprüche 1 bis 16, **dadurch gekennzeichnet, dass** ein Deckel (4) auf dem Gehäuse (2) abnehmbar angebracht ist.

18. Kochunterbaugruppe nach einem der Ansprüche 1 bis 17, **dadurch gekennzeichnet, dass** die Wanne (3; 3'; 3"; 3"'; 3"") mit dem Gehäuse (2; 2'; 2"; 2"'; 2"") zusammengefügt ist.

19. Elektrisches Kochgerät, insbesondere eine Friteuse, ein elektrischer Kochtopf oder eine heizende Küchenmaschine, mit einer Kochunterbaugruppe nach einem der Ansprüche 1 bis 18 und einem Sockel (1) zur elektrischen Versorgung, **dadurch gekennzeichnet, dass** das Gehäuse (2; 2'; 2"; 2"'; 2"") auf dem Sockel (1) zur elektrischen Versorgung abnehmbar angebracht ist.

20. Elektrisches Kochgerät nach Anspruch 19, **dadurch gekennzeichnet, dass** der Sockel (1) zur elektrischen Versorgung mindestens einen Durchgang (15a, 15b) aufweist, der gegenüber der unteren Öffnung (29) mündet.
